# EUROPEAN PATENT APPLICATION

(11) **EP 1 605 701 A2**
(43) Date of publication of application: **14.12.2005**
(21) Application number: 05253484.9
(22) Date of filing: 07.06.2005
(51) Int. Cl.: H04N 7/24, G11B 27/30

(54) **Information storage medium containing AV stream including graphic data, and reproducing method and apparatus therefor**

(30) Priority: 10.06.2004 KR 2004042657; 24.06.2004 KR 2004047624
(71) Applicant: SAMSUNG ELECTRONICS CO., LTD., Suwon-si, Gyeonggi-do (KR)
(72) Inventor: Kang, Man-seok, Suwon-si, Gyeonggi-do (KR); Jung, Kil-soo, Hwaseong-si, Gyeonggi-do (KR); Chung, Hyun-kwon, Seoul (KR)
(74) Representative: Waddington, Richard

(57) **Abstract**

An information storage medium on which an AV stream including video data, audio data, and graphic data multiplexed in an MPEG-2 transport stream format is recorded, and a reproducing method and apparatus, where the AV stream recorded on the information storage medium includes: at least one video source packet; at least one audio source packet; and at least one additional data source packet, disposed after a video source packet having a same presentation time information as that of the additional data source packet. Thus, even when a jump operation of a reproduction location is performed, graphic data corresponding to video data can be displayed together.

## Description

An aspect of the present invention relates to an information storage medium, and more particularly, to an information storage medium on which an AV stream including video data, audio data, and graphic data multiplexed in an MPEG-2 transport stream format is recorded, and a reproducing method and apparatus therefor.

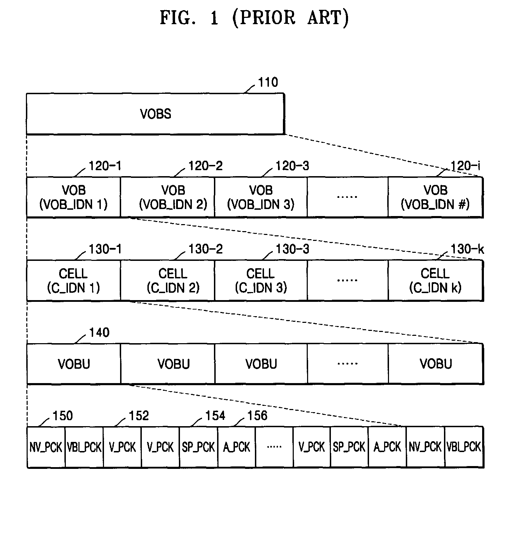

FIG. 1 is a detailed diagram of the structure of a video object set (VOBS) for titles, i.e., actual moving picture data in a video title set (VTS) area, in order to explain the formation of video data, audio data, and additional data complying with a DVD standard.

Referring to FIG. 1, a VOBS 110 is formed with a plurality of video objects (VOBs) 120-1 through 120-i, and each VOB 120-1 is formed with cells 130-1 through 130-k. One cell 130-1 is also formed with a plurality of video object units (VOBUs) 140. The VOBU 140 is data coded using a moving picture experts group (MPEG) method that is used for a digital versatile disk (DVD) in order to encode moving pictures. According to the MPEG method, since images are coded by spatiotemporal-compression, in order to decode an image, a preceding or succeeding image is needed. Accordingly, in order to support a random access function enabling reproduction at an arbitrary point of an AV stream, intra coding that does not need a preceding or succeeding image is performed at each predetermined interval. A picture generated by intra coding is referred to as an intra picture or an I-picture, and pictures from an I picture to the next I picture are referred to as a group of pictures (GOP). Generally, a GOP is formed with 12~15 pictures.

Meanwhile, methods of multiplexing video data and audio data in one bitstream are described in the MPEG standard (ISO/IEC13818-1). The multiplexing methods include a method by which video data and audio data are combined into one program to multiplex a program stream (PS) optimized for storing in an information storage medium, and a method by which a plurality of programs are generated to multiplex a transport stream (TS) generated appropriately for storing through a network. Moving pictures are multiplexed in a DVD, according to the method for multiplexing the TS. In order to multiplex the program stream, video data or audio data is divided into units of packs (PCKs) and the divided video PCKs and audio PCKs are multiplexed by a time division multiplexing method. Data other than the video and audio data defined by the MPEG standard can be referred to as a private stream which can be divided into units of PCKs and multiplexed with video data and audio data.

The VOBU 140 is formed with a plurality of PCKs of which the first PCK is a navigation pack (NV_PCK) 150. Then, the VOBU 140 is formed with video packs (V_PCK) 152, sub-picture packs (SP_PCK) 154 and audio packs (A_PCK) 156. Video data contained in the video pack (V_PCK) 152 is formed with a plurality of GOPs. The sub-picture pack (SP_PCK) 154 is for 2-dimensional graphic data and subtitle data. That is, in the DVD, the subtitle data overlapping a video image is coded in the same method as that for 2-dimensional graphic data. Thus coded graphic data and subtitle data are contained in the sub-picture pack 154. Accordingly, even when a reproduction location is changed by a jump operation, data is reproduced in units of the navigation packs such that a sub picture is always displayed together with video and audio data.

Meanwhile, the MPEG-2 transport stream includes video data, audio data, and additional data multiplexed therein. However, if a jump operation of a reproduction location is performed in the MPEG-2 transport stream, depending on the location of the additional data in the MPEG-2 transport stream, the additional data may not be reproduced together with the video data and audio data.

According to the present invention there is provided an apparatus and method as set forth in the appended claims. Preferred features of the invention will be apparent from the dependent claims, and the description which follows.

According to an aspect of the present invention, there is provided an information storage medium, on which an AV stream including video data, audio data and graphic data multiplexed appropriately in an MPEG-2 transport stream format is recorded, and a reproducing method and apparatus therefor.

According to an aspect of the present invention, there is provided an information storage medium on which an audio visual (AV) stream is recorded, wherein the AV stream includes: at least one video source packet; at least one audio source packet; and at least one additional data source packet, wherein the at least one additional data source packet is disposed after the at least one video source packet having a same presentation time information as that of the at least one additional data source packet.

The additional data source packet may be presentation graphic data having subtitle information corresponding to the video and having a presentation time stamp (PTS) as the output start time of the additional data source packet.

The additional data source packet may be interactive graphic data having interaction relation information with a menu or a user, and having a PTS as the output start time of the additional data source packet.

According to another aspect of the present invention, there is provided an information storage medium on which an AV stream is recorded, wherein the AV stream includes: at least one video source packet; at least one audio source packet; at least one additional data source packet; and an entry point map in which reproducing time information of a video source packet corresponding to an I-picture among the video source packets is recorded, wherein in the entry point map, the packet number of a video source packet and the packet number of an additional data source packet to be reproduced according to the reproducing time information are recorded.

Preferably, when a reproduction location is changed to the video source packet indicated by the entry point map, if the source packet at that location is the first entry point of the clip to which the source packet belongs, reproduction may be performed from the first source packet of the clip.

According to still another aspect of the present invention, there is provided an AV stream reproducing apparatus including: a reading unit for reading an AV stream including at least one video source packet, at least one audio source packet, and at least one additional data source packet, wherein the at least one additional data source packet is disposed after the at least one video source packet having a same presentation time information as that of the at least one additional data source packet; an inverse multiplexing unit for inverse multiplexing the read AV stream to divide the AV stream into the at least one video source packet, the at least one audio source packet, and the at least one additional data source packet; a video decoder for decoding the at least one video source packet and outputting the decoded packet; and an audio decoder for decoding the at least one audio source packet and outputting the decoded packet.

According to yet still another aspect of the present invention, there is provided an AV stream reproducing method including: reading an AV stream including at least one video source packet, at least one audio source packet, and at least one additional data source packet, wherein the additional data source packet is disposed after the at least one video source packet having a same presentation time information as that of the additional data source packet; inverse multiplexing the read AV stream to divide the AV stream into the at least one video source packet, the at least one audio source packet, and the at least one additional data source packet; decoding and outputting the at least one video source packet and the at least one audio source packet.

According to a further aspect of the present invention, there is provided a method of reproducing an AV stream including: receiving a reproduction location change command; determining whether or not a source packet number for additional data is recorded in an entry point map by searching the entry point map in which the packet number of the additional data source packet is recorded in addition to time information on an I-picture in a video source packet and the packet number of the I-picture; and if the additional data source packet number is included in an entry point map, changing the reproduction location to the packet number, or else moving the reproduction location to the packet number of the I-picture to reproduce the AV stream.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a detailed diagram of the structure of a video object set;
FIG. 2 illustrates a process of generating an AV stream by multiplexing a video stream, an audio stream, and other streams for presentation, and recording the AV stream on a storage medium;
FIG. 3 is a simple block diagram of an apparatus for reproducing an AV stream, according to an aspect of the present invention;
FIG. 4 illustrates source packets forming an AV stream recorded on a storage medium to be input to the reproducing apparatus of FIG. 3;
FIG. 5 illustrates changes in system time clock (STC) when source packets having one ATC-Sequence are input to the reproducing apparatus of FIG. 3;
FIG. 6 illustrates the connection relation of navigation information specifying the reproduction order and location of an AV clip recorded on a storage medium with the AV clip;
FIG. 7 illustrates an example of an AV clip containing video data, audio data, and graphic data;
FIG. 8 illustrates an AV clip on which video data, audio data, and graphic data are recorded in the MPEG-2 transport stream (TS) format;
FIG. 9 illustrates the connection relation of EP_map information with each I-picture on an AV clip;
FIG. 10 illustrates an example of audio, video, and graphic packets arranged on an AV clip;
FIGS. 11A through 11C illustrates output screens when the AV clip formed as shown in FIG. 10 is reproduced sequentially;
FIGS. 12A through 12C illustrates output screens when the AV clip formed as shown in FIG. 10 is reproduced with a jump operation;
FIG. 13 illustrates another example of audio, video, and graphic packets arranged on an AV clip;
FIG. 14 illustrates still another example of audio, video, and graphic packets arranged on an AV clip;
FIG. 15 illustrates an example of EP_map() in which the location of graphic data is additionally recorded in addition to the time and location information of each entry point of video data; and
FIG. 16 illustrates a process for performing a reproduction location change command by the EP-map() shown in FIG. 15.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

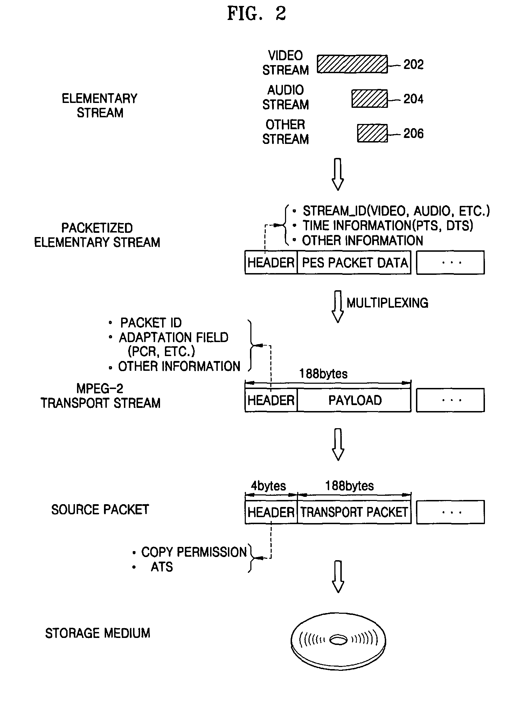

Referring to FIG. 2, in addition to a video stream 202 and an audio stream 204, a presentation graphic stream for displaying a bitmap-based subtitle for video data and other data streams 206 generated by a producer for a specific purpose can be included in an AV stream. The presentation graphic stream, an interactive graphic stream, and other data streams are collectively referred to as an additional data stream.

Encoded video data, audio data, and other data are transformed into respective elementary streams. Thus generated video elementary stream, audio elementary stream and other elementary streams are packetized, respectively, and packetized elementary streams (PESs) are generated. One PES is formed with a header field and a PES packet data field. Stream_id information to indicate whether data recorded in the PES packet data field is video data, audio data or other data, and time information on the decoding time stamp (DTS) and presentation time stamp (PTS) of the PES packet are recorded in the header field.

The PESs are multiplexed to form a 188-byte MPEG-2 transport stream (TS). The 188-byte TS packet is formed with a header in which information on the packet is recorded and a payload in which data is recorded. The header of the TS packet includes packet ID information and an adaptation field. The Packet ID information indicates the type of data recorded in the payload and the adaptation field includes program clock reference (PCR) information for setting a system time clock (STC) that is a reference time of the DTS, and a PTS used to decode and output the data of the PES packet.

Next, a source packet is formed by adding a 4-byte header to the 188-byte TS packet, thus forming an AV stream in which video and audio data are recorded. The header of the source packet includes copy permission information in which content protection information of the packet is recorded, and arrival time stamp (ATS) information indicating a time when the source packet arrives at a reproducing apparatus.

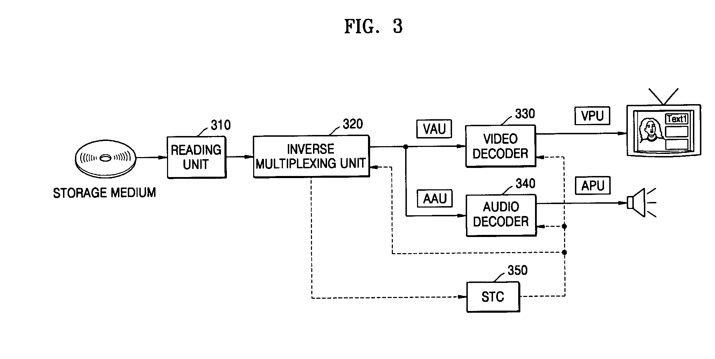

FIG. 3 is a simple block diagram of an apparatus for reproducing an AV stream, according to an aspect of the present invention.

A reading unit 310 reads an AV stream from an information storage medium on which the AV stream is generated as described above with reference to FIG. 2.

Then, according to the ATS recorded in the header of the source packet, the source packet is transferred to an inverse multiplexing unit 320. The inverse multiplexing unit transforms the source packet into MPEG-2 TS packets by removing the header from the received source packet. If PCR information is included in the MPEG-2 TS packet header, the STC 350 of the reproducing apparatus is set according to the PCR value, and according to the packet ID, the MPEG2-TS packets are divided into video streams and audio streams to generate respective PES packets. The STC 350 continuously increases by counting the system clock, and according to the PCR, the STC 350 is occasionally reset to a value indicated by the PCR.

The thus generated PES packet is transmitted to a video decoder 330 and an audio decoder 340 when a DTS included in the PES packet header corresponds to the STC 350 of the reproducing apparatus. The decoded video data or audio data is output when the PTS corresponds to the STC 350 of the reproducing apparatus. At this time, the unit of a video stream output at a predetermined time is referred to as a video presentation unit (VPU) and the unit of an audio stream is referred to as an audio presentation unit (APU). Also, the unit of a video stream containing data to be decoded by the video decoder 330 to generate a VPU is referred to as a video access unit (VAU) and the unit of an audio stream containing data to be decoded by the audio decoder 340 to generate an APU is referred to as an audio access unit (AAU).

That is, the source packet recorded on the storage medium is inverse multiplexed to generate a VAU and an AAU that are units to be decoded at a predetermined time. When the DTS recorded in each access unit corresponds to the STC of the reproducing apparatus, the access units are transferred to the video decoder 330 and the audio decoder 340 and decoded into a VPU and an APU, respectively. Then, when the PTS of each presentation unit corresponds to the STC of the reproducing apparatus, the presentation unit is output. The PTS of the audio stream may indicate both a time for the AAU to be input to the audio decoder 340 and a time to be output from the audio decoder 340.

Meanwhile, though not shown in FIG. 3, in the same manner as for the video stream and audio stream, a presentation graphic stream for bitmap-based subtitle data is also transformed into an access unit and then a presentation unit with the DTS and PTS corresponding to the STC of the reproducing apparatus such that the presentation graphic stream can be synchronized with the video data and audio data.

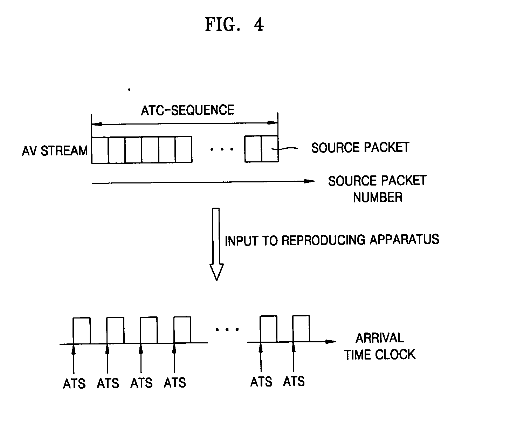

FIG. 4 illustrates source packets, forming an AV stream recorded on a storage medium to be input to the reproducing apparatus of FIG. 3.

The AV stream is formed with a plurality of source packets. Each header of each source packet includes ATS information that is information on a time when the source packet is input to the reproducing apparatus. An arrival time clock (ATC) counter of the reproducing apparatus is reset to the ATS value of the source packet which is first input to the reproducing apparatus. Source packets that are input after that time are input to the reproducing apparatus when the ATS value of each source packet header corresponds to the ATC counter value. At this time, if the ATS values of respective source packets are connected continuously without pause, these source packets have an identical ATC-Sequence. In general, it is preferable, but not necessary, that one AV stream be formed with one ATC-Sequence.

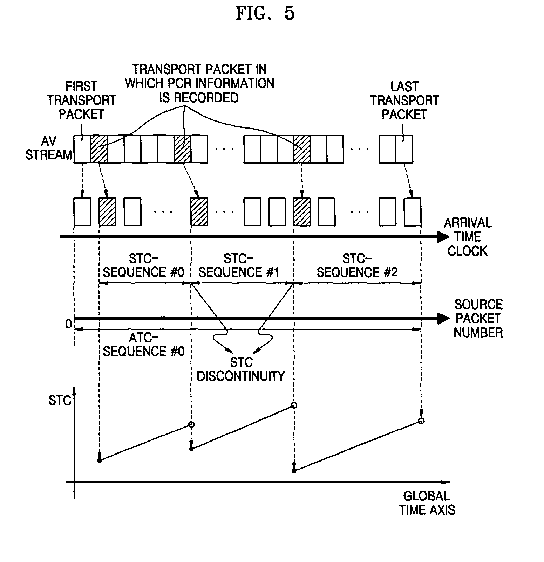

FIG. 5 illustrates changes in a system time clock (STC) when source packets having one ATC-Sequence are input to the reproducing apparatus of FIG. 3.

Source packets included in one ATC-Sequence are input to the reproducing apparatus sequentially according to the ATSs of the respective source packets, and then, are reconstructed to an MPEG-2 TS packet. At this time, if PCR information is included in the header of the MPEG-2 TS packet, the reproducing apparatus resets the STC by using the PCR information. An STC-Sequence means a sequence of MPEG-2 TS packets controlled by the STC which continuously increases by the PCR information of a predetermined MPEG-2 TS packet.

At least one STC-Sequence can be included in one ATC-Sequence. At this time, when the STC-Sequence changes, that is, in the first MPEG-2 TS packet of a new STC-Sequence, PCR information for resetting the STC should be included, and at this time point, discontinuity of the STC value occurs.

Referring to FIG. 5, it can be seen that when an AV stream having one ATC-Sequence is reproduced, the global time having the start time point for reproducing the AV stream as 0 increases sequentially, while STC-Sequences moving from STC-Sequence #0 to STC-Sequence #2 have different STCs in each STC-Sequence.

However, even when discontinuity in the STC-Sequence occurs and the STC is reset, the video stream, audio stream, and presentation graphic stream are multiplexed in one AV stream and therefore, the DTS and PTS of each stream can be processed by the STC in the STC-Sequence controlling the corresponding time information.

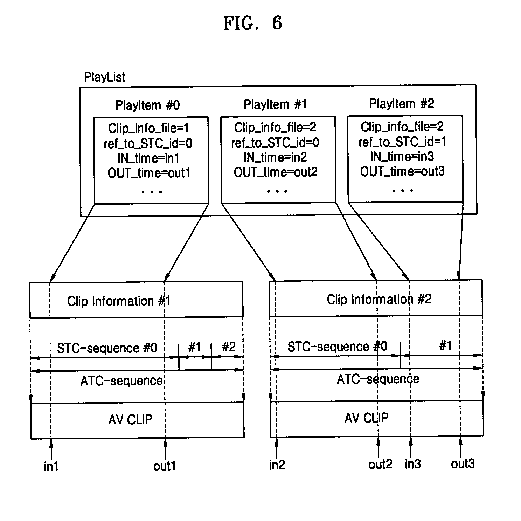

FIG. 6 illustrates the connection relation of navigation information specifying the reproduction order and location of an AV clip recorded on a storage medium with the AV clip.

The AV clip is a recording unit forming the AV stream. Clip information recording attribute information of the AV clip and navigation information indicating the reproducing order of the AV clip are included on the storage medium, in addition to the AV clip. Title information on at least one title contained in the storage medium and at least one PlayList including reproducing order information of AV clips to be reproduced by each title are included in the navigation information.

Referring to FIG. 6, the PlayList includes at least one PlayItem containing reference information to indicate an AV clip to be reproduced. The PlayItem includes Clip_info_file as information to be used for reproduction, indicating clip information in which attribute information of the AV clip is recorded and ref_to_STC_id indicating the number of STC-Sequence containing the STC of the AV clip indicated by the PlayItem on the AV clip, and IN_time and OUT_time information indicating the start and end of the PlayItem in the STC-Sequence indicated by the PlayItem.

In the reproduction process of data on the storage medium having this data structure, a PlayList indicted by a title desired to be reproduced is selected, and if a PlayItem included in the selected PlayList is of a normal reproduction type, data is sequentially selected from the first PlayItem, and if the PlayItem is of a random access type, data is sequentially selected from the specified PlayItem.

If PlayItem #0 is first selected, clip information #1 is selected by information that Clip_infor_file=1, STC-Sequence #0 in ATC-Sequence of the AV clip indicated by the clip information #1 is selected by information that ref_to_STC_id=0, and data from locations in1 through out1 indicted by the STC corresponding to STC-Sequence #0 are reproduced by information that IN_time=in1 and OUT_time=out1.

Next, if PlayItem #1 is selected, clip information #2 is selected by information that Clip_info_file=2, STC-Sequence #0 in ATC-Sequence of the AV clip indicated by the clip information #2 is selected by information that ref_to_STC_id=0, and data from locations in2 through out2 indicted by the STC corresponding to STC-Sequence #0 are reproduced by information that IN_time=in2 and OUT_time=out2. Then, in the same manner, the following PlayItems are reproduced.

In other words, the reproduction process is as follows; one PlayList is selected; by selecting a PlayItem included in the PlayList, the location of an AV clip to be reproduced is found; AV clips from the location are transmitted to the reproducing apparatus according to the ATS; and then, by using the MPEG-2 TS packet including PCR information among the transmitted data, the STC of the reproducing apparatus is reset. Then, decoding of each of the VAU and the AAU begins to generate a presentation unit when the PTS included in the access unit corresponds with the STC, and if the PTS of the presentation unit corresponds to the STC, the presentation unit is output.

Meanwhile, when a clip is reproduced, if the reproduction location indicated by the IN_time in the PlayItem is visited and found to be the first I-picture in the clip, the reproduction does not begin from the location indicated by IN_time, but from the first location of the clip. This is to decode additional data in advance for seamless reproduction of audio data and video data.

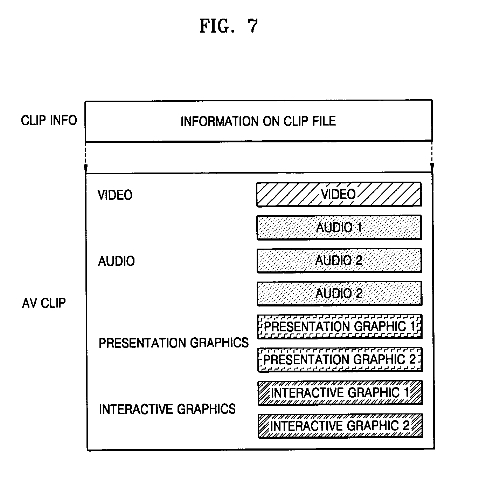

FIG. 7 illustrates an example of an AV clip containing video data, audio data, and graphic data. Referring to FIG. 7, it can be seen that the AV clip includes one video data item, 3 audio data items, 2 presentation graphic data, and 2 interactive graphic data. The 3 audio data items are formed with different languages, English, Korean, and Japanese, respectively. The presentation graphic data is data for outputting graphics such as a subtitle for moving pictures as the subtitle output in the conventional DVD. In the example of FIG. 7, the presentation graphic data includes 2 presentation graphic data items each formed with a different language. The interactive graphic data is data for receiving an input from a user, such as menu or button data, and performing the specified command. In the example of FIG. 7, the interactive graphic data includes 2 interactive graphic data items formed with different languages.

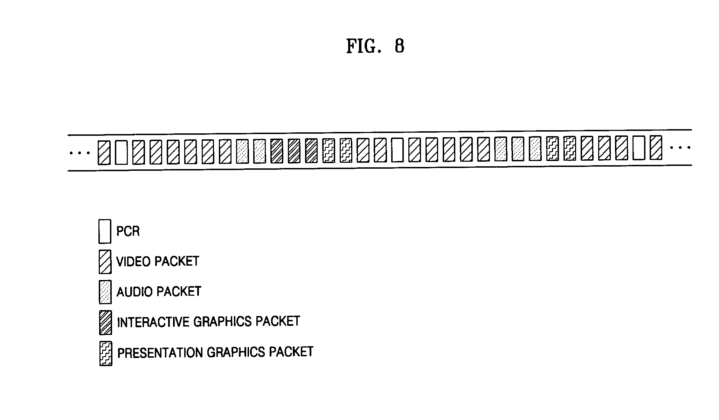

FIG. 8 illustrates an AV clip on which video data, audio data, and graphic data are recorded in the MPEG-2 TS format.

Referring to FIG. 8, it can be seen that each data item is made in packets of a predetermined size, and the generated packets include PCR packets having PCR information that is reference time information of the reproducing apparatus, as well as video packets, audio packets, and graphic packets. Also, it can be seen that the graphic packets include interactive graphic packets and presentation graphic packets.

If the video data is encoded in the MPEG-2 coding method, I-, B-, and P-pictures are generated. Each of these pictures has a PTS, and these pictures are arranged in order of the PTS. Audio data is encoded in a linear pulse code modulation (LPCM), MPEG-2 audio encoding, AC-3 or digital theater system (DTS) method, and encoded data is arranged on the AV clip. Also, interactive graphic data and presentation graphic data have respective PTSs that are time information for outputting, and are arranged on the AV clip.

Though the video data generated according to the MPEG-2 coding method is described in the present embodiment for convenience of explanation, the video data can also be generated in the MPEG-4 or a variety of other video coding methods. In this case, even when the location of a source packet in an AV clip in which the first data item of a VAU is recorded as an entry point on EP_map, the AV stream generation method of the present invention can be applied.

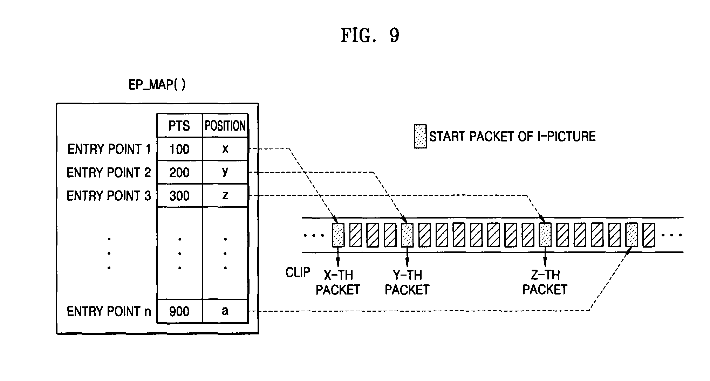

FIG. 9 illustrates the connection relation of EP_map information with each I-picture on an AV clip.

The EP_map information is included in clip information. The EP_map information stores the PTS information on each I-picture and information on which location of the clip the I-picture that should be output at each PTS time is located. Here, the location of each I-picture is referred to as an entry point. The EP_map() includes a plurality of entry points, and this information can be used to move to the location of moving pictures to be output at a predetermined PTS. Also, this can be used to obtain a range indicated by a PlayItem on an AV clip according to the IN_time and OUT_time information of the PLayItem included in a PlayList. That is, the range indicated by the PlayItem is from the location on the AV clip corresponding to the IN_time to the location corresponding to the OUT_time.

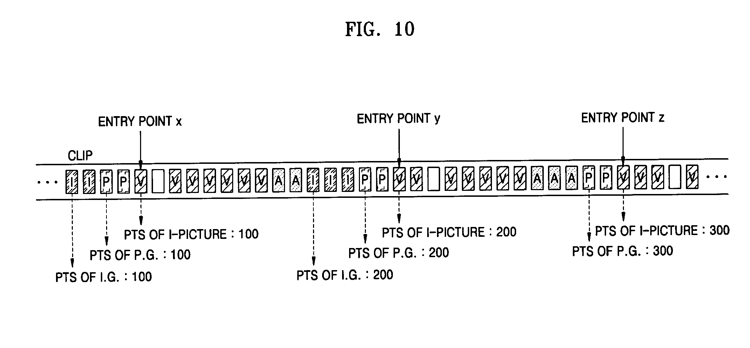

FIG. 10 illustrates an example of audio, video, and graphic packets arranged in an AV clip.

The I-picture at the location indicated by entry point x has a PTS value of 100, presentation graphic data having a PTS value of 100 and interactive graphic data having a PTS value of 100 are arranged in front of the I-picture. Also, the I-picture at the location indicated by entry point y has a PTS value of 200, and presentation graphic data having a PTS value of 200 and interactive graphic data having a PTS value of 200 are arranged in front of the I-picture having the PTS value of 200. Likewise, the I-picture at the location indicated by entry point z has a PTS value of 300, and presentation graphic data having a PTS value of 300 is arranged in front of the I-picture having the PTS value of 300.

If the thus arranged AV clip is sequentially reproduced, when the reproducing apparatus processes the location indicated by the entry point x, the presentation graphic data and interactive graphic data are already processed and are in a waiting state for presentation in a graphic decoder. Accordingly, when the video data at the location indicated by the entry x begins to be output at a time point corresponding to the PTS value 100, the presentation graphic data and interactive graphic data begin to be reproduced in the output order at the same time.

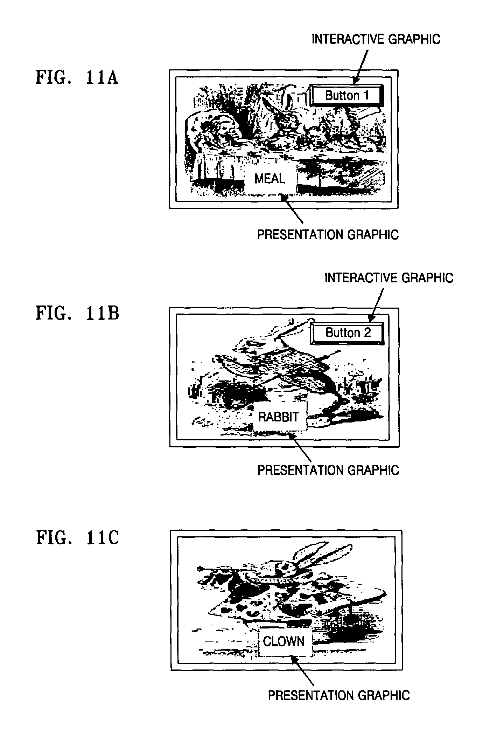

FIGS. 11A through 11C illustrates output screens when the AV clip formed as shown in FIG. 10 is reproduced sequentially.

It can be seen that at a time point corresponding to the PTS value 100 that is a time point for the video data indicated by the entry point x is output, the video data is output together with the presentation graphic and interactive graphic on the screen as shown in FIG. 11A. Also, it can be seen that at a time corresponding to the PTS value 200 when the video data indicated by the entry point y is output, the video data is output together with the presentation graphic and interactive graphic on the screen as shown in FIG. 11B. It can be seen that at a time corresponding to the PTS value 300 when the video data indicated by the entry point z is output, the video data is output together with the presentation graphic on the screen as shown in FIG. 11C.

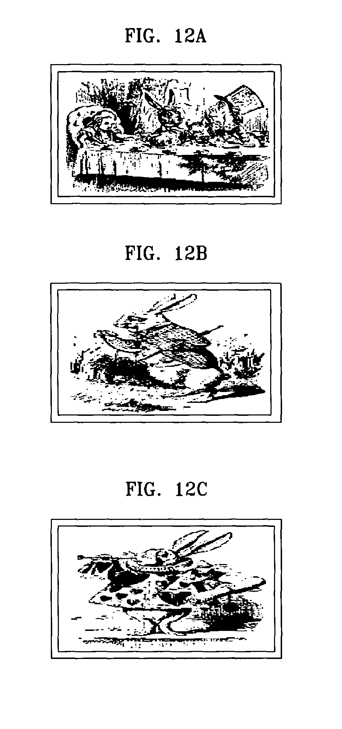

FIGS. 12A through 12C illustrate output screens when the AV clip formed as shown in FIG. 10 is reproduced with a jump operation.

Referring to FIGS. 12A through 12C, unlike the sequential reproduction, in the reproduction by the jump operation to each entry point, it can be seen that the presentation graphic and interactive graphic are not output. This is because of the arrangement order of each video data, audio data, presentation graphic data, and interactive graphic data in the AV clip shown in FIG. 10. That is, when video data, presentation graphic data, and interactive graphic data having identical PTSs are arranged, the presentation graphic data and interactive graphic data are arranged first and then the video data is arranged as shown in FIG. 10. Since the EP_map() indicates the location of the I-picture of the video data, when reproduction is performed after a jump operation to the entry point x, the presentation graphic and interactive graphic recorded in front of the location indicated by the entry point x are not output. In the case of jump operations to the entry points y and z, the results are the same.

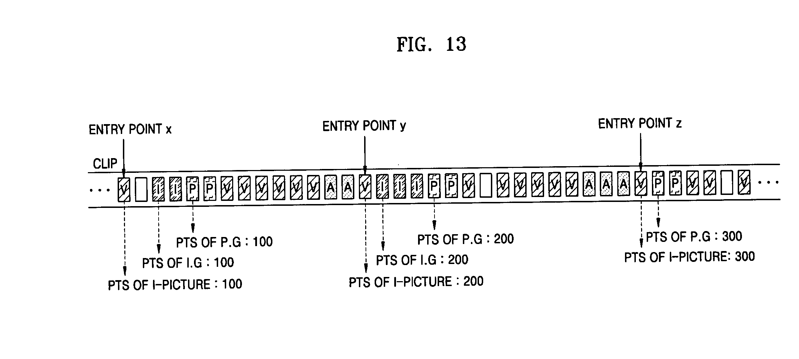

FIG. 13 illustrates another example of audio, video, and graphic packets arranged in an AV clip. Referring to FIG. 13, it can be seen that the presentation graphic data and interactive graphic data having the same PTSs as that of the I-picture of the video data are recorded after the I-picture. Accordingly, even when reproduction is performed after a jump operation to each entry point, the interactive graphic data and presentation graphic data arranged after the I-picture are read and output.

Accordingly, it is preferable, but not necessary, that presentation graphic data and interactive graphic data or other additional data constructed to be output in synchronization with video data satisfy the following relations.

That is, in case of the presentation graphic data, if (PTS of entry point i) <= (PTS of presentation graphic corresponding to entry point i), then (SPN of entry point i) < (SPN of presentation graphic corresponding to the entry point i). The SPN stands for a source packet number and indicates the location in an AV clip. Likewise, in the interactive graphic data, if (PTS of entry point j) <= (PTS of interactive graphic corresponding to entry point j), then (SPN of entry point j) < (SPN of interactive graphic corresponding to the entry point j).

These relations are not limited to the presentation graphic data or interactive graphic data, but can be commonly applied to additional data multiplexed in one AV clip and having PTS values.

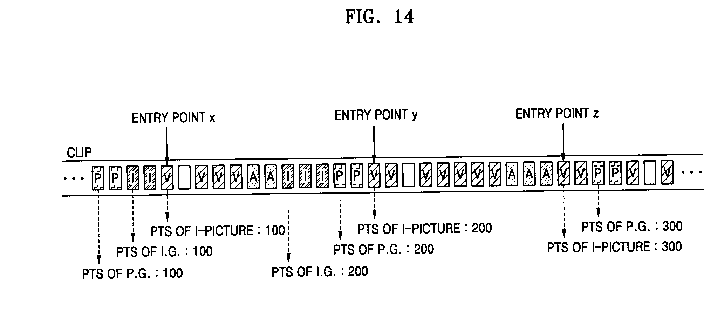

FIG. 14 illustrates still another example of audio, video, and graphic packets arranged on an AV clip.

Referring to FIG. 14, it can be seen that presentation graphic data and interactive graphic data are located before or after an I-picture.

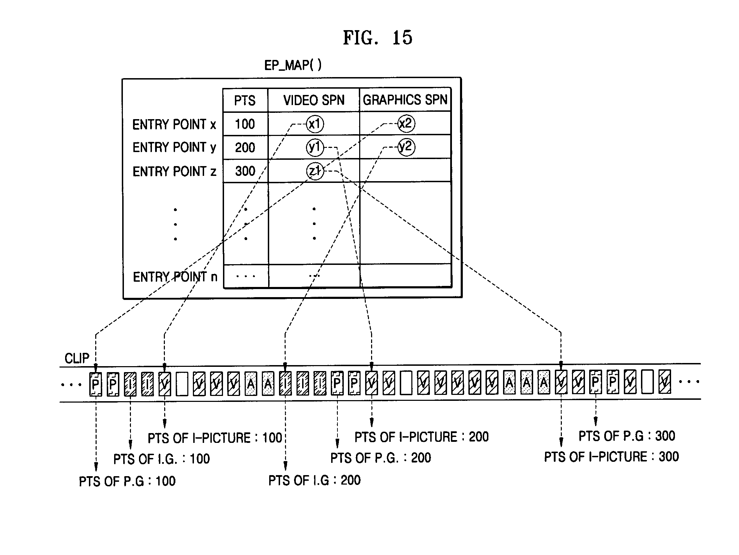

Accordingly, in some cases, when reproduction is performed after a jump operation to the entry point x on the AV clip formed as shown in FIG. 14, if reproduction is performed from the location of the entry point x, the interactive graphic having the same PTS value as the PTS value 100 of the video data indicated by the entry point x is not output. Accordingly, the location information of the graphic data is additionally included in the location information on the AV stream indicated by the entry point x. This will now be explained with reference to FIG. 15.

FIG. 15 illustrates an example of EP_map() in which, in addition to the time and location information of each entry point of video data, the location of graphic data is additionally recorded.

In the conventional EP_map(), each entry point of video data, that is, a PTS that is time information on an I-picture and an SPN indicating the location on the AV stream are recorded. Here, by additionally recording a packet number indicting the location of graphic data, when reproduction is performed after a jump operation to a predetermined entry point, it can be determined whether reproduction should be performed from the start point of the I-picture of the video data or the start point of the graphic data. Referring to FIG. 15, video data, audio data, presentation graphic data, and interactive graphic data are multiplexed on an AV stream and PTS and SPN information of each I-picture of the video data are recorded in the EP_map(). In addition, it can be seen that when graphic data having a PTS equal to or greater than the PTS of each I-picture is recorded before the SPN of the I-picture, the SPN value of the graphic data is further recorded in the EP_map().

Meanwhile, if the location to be reproduced is the first entry point of the clip, reproduction is performed from the first SPN that is the first data of the clip.

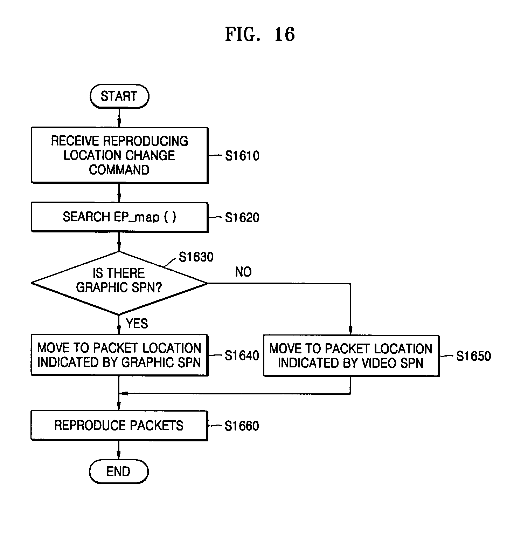

FIG. 16 illustrates a process for performing a reproduction location change command by the EP-map() shown in FIG. 15.

If the reproducing apparatus receives a reproduction location change command, such as a time movement, or a chapter movement, in operation S1610, the reproducing apparatus searches the EP_map() for an entry point corresponding to the location indicated by the change command, based on the PTS of the video data in operation S1620. After the entry point desired to be reproduced is found, it is confirmed whether or not the entry point includes a graphic SPN in operation S1630.

If the graphic SPN is recorded, the reproducing apparatus moves to the location indicated by the graphic SPN in operation S1640, or else, the reproducing apparatus moves to the location indicated by the video SPN in operation S1650. Then, reproduction begins in operation S1660. The graphic SPN in operation S1640 refers to the additional data source packet number and the video SPN in operation S1650 refers to the packet number of I-picture.

Meanwhile, the method of reproducing the AV stream described above can be implemented as a computer program. Codes and code segments forming the program can be easily inferred by the programmers in the technology field of the present invention. Also, the program is stored in computer readable media, and read and executed by a computer to implement the reproducing method. The computer readable media includes magnetic recording media, optical recording media and carrier wave media.

While the present invention has been particularly shown and described with reference to exemplary embodiments thereof, it will be understood by those of ordinary skill in the art that various changes in form and details may be made therein without departing from the spirit and scope of the present invention as defined by the following claims. The embodiments should be considered in descriptive sense only and not for purposes of limitation. Therefore, the scope of the invention is defined not by the detailed description of the invention but by the appended claims, and all differences within the scope will be construed as being included in the present invention.

According to the present invention as described above, when a reproduction location is changed, if graphic data having a PTS equal to or greater than a PTS indicated by an arbitrary entry point has an SPN less than the SPN indicated by the entry point, that is, even if the graphic data is recorded before the video data, both the video and graphic data can be output.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium on which an audio visual (AV) stream is recorded, wherein the AV stream comprises:
at least one video source packet;
at least one audio source packet; and
at least one additional data source packet, wherein the at least one additional data source packet is disposed after the at least one video source packet having a same presentation time information as that of the at least one additional data source packet.

2. The information storage medium of claim 1, wherein the presentation time information included in the at least one additional data source packet is a presentation time stamp (PTS) value indicating a time when decoded additional data is output from a reproducing apparatus reproducing the AV stream.

3. The information storage medium of claim 1 or claim 2,
wherein the at least one additional data source packet is presentation graphic data having subtitle information corresponding to a video and having a PTS as an output start time of the at least one additional data source packet.

4. The information storage medium of any one of claims 1 to 3, wherein the at least one additional data source packet is interactive graphic data having interaction relation information with a menu or a user, and having a PTS as an output start time of the at least one additional data source packet.

5. The information storage medium of any preceding claim,
wherein each of the video source packets, the audio source packets, and the additional data source packets are packets with a predetermined size generated by adding a header including an arrival time stamp to a moving picture experts group (MPEG)-2 transport stream packet.

6. An information storage medium on which an AV stream is recorded, wherein the AV stream comprises:
at least one video source packet;
at least one audio source packet;
at least one additional data source packet; and
an entry point map in which reproducing time information of one of the at least one of the video source packets corresponding to an I-picture among the video source packets is recorded,
wherein in the entry point map, a packet number of the one of the video source packets and a packet number of one of the additional data source packets to be reproduced according to the reproducing time information are recorded.

7. The information storage medium of claim 6, wherein when a reproduction location is changed of the at least one video source packet indicated by the entry point map, if the at least one video source packet at the reproduction location is a first entry point of a clip to which the at least one video source packet belongs, reproduction is performed from a first video source packet of the clip.

8. An AV stream reproducing apparatus comprising:
a reading unit (310) for reading an AV stream including at least one video source packet, at least one audio source packet, and at least one additional data source packet, wherein the at least one additional data source packet is disposed after the at least one video source packet having a same presentation time information as that of the at least one additional data source packet;
an inverse multiplexing unit (320) for inverse multiplexing the read AV stream to divide the AV stream into the at least one video source packet, the at least one audio source packet, and the at least one additional data source packet;
a video decoder (330) for decoding the at least one video source packet and outputting the decoded video packet; and
an audio decoder (340) for decoding the at least one audio source packet and outputting the decoded audio packet.

9. The apparatus of claim 8, wherein the at least one additional data source packet is presentation graphic data having subtitle information corresponding to a video and having a presentation time stamp (PTS) as an output start time of the at least one additional data source packet.

10. The apparatus of claim 8 or claim 9, wherein the at least one additional data source packet is interactive graphic data having interaction relation information with a menu or a user, and having a PTS as an output start time of the at least one additional data source packet.

11. The apparatus of any one of claims 8 to 10, wherein the AV stream further comprises:
an entry point map in which reproducing time information of one of the video source packets corresponding to an I-picture among the video source packets, and a packet number of the video source packet and a packet number of one of the additional data source packets to be reproduced according to the reproducing time information are recorded.

12. The apparatus of claim 11, wherein when a reproduction location is changed to the one video source packet indicated by the entry point map, if the one video source packet at the reproduction location is a first entry point of a clip to which the video source packet belongs, reproduction is performed from a first video source packet of the clip.

13. An AV stream reproducing method comprising:
reading an AV stream including video source packets, audio source packets, and additional data source packets,
wherein at least one additional data source packet is disposed after at least one video source packet having a same presentation time information as that of the one additional data source packet;
inverse multiplexing the read AV stream to divide the AV stream into the video source packets, the audio source packets, and the additional data source packets;
decoding and outputting the video source packets and the audio source packets.

14. The method of claim 13, wherein the AV stream further comprises:
an entry point map in which reproducing time information of one of the video source packets corresponding to an I-picture among the video source packets, and a packet number of the one video source packet and a packet number of one of the additional data source packets to be reproduced according to the reproducing time information are recorded.

15. The method of claim 14, wherein when a reproduction location is changed to the video source packet indicated by the entry point map, if the one video source packet at the changed location is a first entry point of a clip to which the one video source packet belongs, reproduction is performed from a first video source packet of the clip.

16. A method of reproducing an AV stream, comprising:
receiving a reproduction location change command;
determining whether an additional data source packet number is recorded in an entry point map by searching the entry point map in which the additional data source packet number is recorded in addition to time information of an I-picture in a video source packet and a packet number of the I-picture; and
if the additional data source packet number is included, changing a reproduction location to the packet number of the I-picture, or else, moving the reproduction location to the packet number of the I-picture to reproduce the AV stream.

17. An information storage medium on which an audio visual (AV) stream is recorded, wherein the AV stream comprises:
video source packets;
audio source packets; and
additional data source packets, wherein one of the additional data source packets is disposed after or before one of the video source packets and wherein the video source packet has a same presentation time information as the one additional data source packet.

18. The information storage medium of claim 17, wherein the presentation time information included in the one additional data source packet is a presentation time stamp (PTS) value indicating a time when the additional data source packets are output from a reproducing apparatus reproducing the AV stream.

19. The information storage medium of claim 17 or claim 18, wherein the additional data source packets include presentation graphic data and/or interactive graphic data.

20. The information storage medium of any one of claims 17 to 19, wherein if a presentation time stamp (PTS) of an entry point is less than or equal to a PTS of the additional data source packets, then a source packet number of the entry point is less than a source packet number of the additional data source packets.

21. A method of reproducing an AV stream, comprising:
receiving a reproduction location change command;
searching an entry point map for an entry point corresponding to the location change command;
determining whether the entry point includes an additional data source packet number or a video source packet number; and
if the additional data source packet number is included, changing a reproduction location of the AV stream to the additional data source packet number, or else, changing the reproduction location to the packet number of the I-picture to reproduce the AV stream.
